Europäisches Patentamt

European Patent Office

Office européen des brevets

(19)

(11) Numéro de publication : **0 105 100**
**B1**

(12) FASCICULE DE BREVET EUROPÉEN

(45) Date de publication du fascicule du brevet :
10.09.86

(21) Numéro de dépôt : 83106703.8

(22) Date de dépôt : 08.07.83

(51) Int. Cl.⁴ : **A 23 L   1/16**, A 23 L   1/04,
A 23 L   1/216

(54) Procédé de fabrication de pâtes alimentaires à base de féculents.

(30) Priorité : 23.09.82 CH 5619/82

(43) Date de publication de la demande :
11.04.84 Bulletin 84/15

(45) Mention de la délivrance du brevet :
10.09.86 Bulletin 86/37

(84) Etats contractants désignés :
AT BE CH DE FR IT LI LU NL SE

(56) Documents cités :
DE-A- 2 033 545
FR-A- 2 282 813
US-A- 2 450 525
US-A- 2 791 508
US-A- 2 992 925
US-A- 3 093 483

(73) Titulaire : SOCIETE DES PRODUITS NESTLE S.A.
Case postale 353
CH-1800 Vevey (CH)

(72) Inventeur : Lechthaler, Jürg
Winterthurerstrasse 402
CH-8051 Zurich (CH)

Jouve, 18, rue St-Denis, 75001 Paris, France

EP 0 105 100 B1

## Description

La présente invention a pour objet un procédé de fabrication de pâtes alimentaires à base de féculents par des opérations de gélatinisation, d'extrusion et de séchage.

La fabrication domestique et artisanale de nouilles de riz est répandue depuis longtemps dans les pays d'orient producteurs de riz. Les procédés utilisés varient d'une région ou d'un pays à l'autre, mais ils reposent tous sur un petit nombre d'opérations fondamentales qui sont enchaînées et/ou répétées au gré des traditions locales et aussi en fonction des qualités particulières des riz locaux. Le problème fondamental est de conférer à la pâte de riz la cohésion qui lui manque. La faible teneur en protéines du riz d'une part et la nature même de ces protéines d'autre part font en effet qu'il n'est pas possible de créer avec le riz un réseau comparable à celui formé par le glutène de blé dans des produits tels que le pain ou les pâtes alimentaires. Pour remplacer ce réseau dans lequel les grains d'amidon sont encastrés, il est nécessaire soit d'utiliser des agents liants soit de faire subir aux grains d'amidon des traitements tels qu'ils puissent former seuls une masse présentant la cohésion nécessaire. Ces problèmes de cohésion se retrouvent aussi bien au niveau du travail de la pâte fraîche qu'à celui de la reconstitution et de la consommation du produit final.

On peut compter au nombre des opérations fondamentales traditionnelles et typiques le trempage des grains de riz, la mouture humide, la pré- et la postgélatinisation, le refroidissement et le travail mécanique de la pâte p. ex. C'est ainsi qu'un procédé traditionnel typique comprend les étapes successives de trempage d'une farine de riz durant plusieurs heures, prégélatinisation, refroidissement, extrusion, postgélatinisation et séchage. On peut citer par ailleurs comme agents liants typiques qui ont été proposés les protéines d'œuf, les protéines solubles du petit-lait ou le glutène de blé p. ex. On connaît en particulier des procédés où l'on utilise de la farine de riz en combinaison avec de la farine de blé, ce qui ne va pas de soi car si l'on prégélatinise la farine de riz mélangée à la farine de blé, on dénature le glutène de blé et l'on ne peut plus façonner la pâte.

Afin de simplifier le procédé artisanal de fabrication de pâtes de riz orientales connues dans le sud-est de l'Asie sous le nom de « Beehoon » et de garantir une qualité constante de la production, un procédé de fabrication industrielle a été proposé, dans lequel les grains de riz sont moulus à sec et 10 parties de la farine résultante sont mélangées avec 4 parties en poids d'eau chaude. La pâte est pétrie et passée à travers un tamis pour former des grains de environ 4 mm$^3$. Les grains sont longuement passés à la vapeur puis refroidis et extrudés une première fois. Les bandes ou tubes ainsi formés sont découpés en tronçons courts qui sont conduits à une deuxième extrudeuse où ils sont retravaillés. La deuxième extrudeuse produit de longs vermicelles ou spaghetti qui sont suspendus sur des barres horizontales, passés longuement à la vapeur puis séchés. Un tel procédé comporte encore de trop nombreuses opérations d'extrusion et de traitement à la vapeur, ces dernières nécessitant en particulier de très grosses installations.

Par ailleurs, afin de permettre la fabrication de pâtes de riz en y incorporant de la farine de blé, il a été proposé de tremper et cuire le riz d'abord puis le mélanger à la farine de blé, former une feuille du mélange, découper la feuille en nouilles, sécher et empaqueter. Quoique séduisant sur le plan technique, un tel procédé n'est guère rationnel là où la matière première locale est le riz et non le blé p. ex.

Enfin, un procédé a été décrit, dans lequel des farines de soja et de maïs sont utilisées pour remplacer une majeure partie de la farine de blé dans la fabrication de pâtes alimentaires. Dans ce procédé, le rôle joué par les divers composants d'une part et la gélatinisation d'autre part dans le but de compenser l'absence de glutène de blé est abordé. La possibilité d'utiliser en outre certains additifs tels que des agents gélifiants y est mentionnée. Cependant, ce procédé ne permet pas et ne dévoile pas comment il serait possible de fabriquer industriellement de manière simple des pâtes de maïs seul, sans parler des pâtes à base unique de riz p. ex. Cette deuxième remarque peut être faite également à propos de chacun des procédés selon l'un des trois brevets mentionnés ci-après.

US-A-2 992 925 décrit la coextrusion coaxiale de deux purées de légumes, fruits ou autres matières alimentaires, notamment oignons, champignons, pois, épinards, poivrons ou fromage. Chaque purée contient un précurseur de gel, notamment un alginate, une quantité limitée d'agent gélifiant, notamment du calcium, et un retardateur de gel, notamment du phosphate tétrasodique. Chaque purée est préchauffée pour former un prégel puis refroidie avant la coextrusion. Le coextrudat obtenu est immergé dans une solution de fixation contenant notamment du chlorure de calcium, puis éventuellement séché.

FR-A-2 282 813 décrit la fabrication de pâtes alimentaires précuites, par cuisson-extrusion et séchage d'un mélange de semoule de blé dur et d'eau.

US-A-2 450 525 décrit la préparation de pâtes alimentaires classiques à temps de cuisson contrôlable par mélange de semoule de blé dur et d'une solution aqueuse d'un colloïde, notamment d'un alginate, extrusion et séchage.

La présente invention a pour but de proposer un procédé de fabrication de pâtes alimentaires à base de féculents qui ne présente pas les défauts ci-dessus des procédés connus tant sur le plan du nombre d'opérations que de l'équipement et des matières premières, qui soit donc simple à mettre en œuvre et permette l'utilisation de riz ou de maïs seul, voire d'autres féculents tels que la pomme de terre ou les légumineuses p. ex.

Le procédé selon la présente invention est caractérisé par le fait que l'on mélange une farine ou semoule de féculent avec de l'eau adoucie et un agent gélifiant ionique pour obtenir une pâte contenant 35 à 55 % d'eau, on gélatinise la pâte par chauffage et pétrissage sous pression, on refroidit la pâte à une température inférieure à 100 °C, on l'extrude en forme de pâtes alimentaires, on met les pâtes en contact avec de l'eau contenant un cation formant un gel avec ledit agent gélifiant ionique et on les sèche.

Le présent procédé est donc remarquable par sa simplicité, une seule étape de gélatinisation et une seule étape d'extrusion, simplicité à laquelle aucun des procédés connus n'avait accédé malgré tous les efforts dirigés en ce sens. Mais le présent procédé est remarquable également par la qualité des produits qu'il permet d'obtenir, produits que l'on peut considérer comme les égaux des meilleurs produits artisanaux orientaux correspondants. Le présent procédé est enfin très économique, non seulement parce qu'il requiert moins d'équipement et d'opérations que les procédés connus, mais encore parce qu'il garantit un minimum de pertes de matière première à la fabrication et même à la consommation, à savoir à la cuisson.

Pour mettre en œuvre le présent procédé, on peut utiliser toute matière première végétale riche en amidon et classée en conséquence dans les féculents par le spécialiste des denrées alimentaires, notamment les graines de céréales et de légumineuses et les tubercules riches en amidon tels que les pommes de terre ou l'igname par exemple. On utilise de préférence le riz ou le maïs.

On peut également incorporer un complément d'amidon riche en amylose à ladite pâte contenant 35 à 55 % d'eau, notamment pour compenser une teneur relativement élevée en protéines, comme dans les légumineuses, ou en amylopectine, comme dans les pommes de terre.

Le degré de mouture de la farine ou semoule dudit féculent peut être choisi en fonction des dimensions des ouvertures de la filière. On travaille de préférence avec une finesse de grain qui leur permette simplement de passer à travers de telles ouvertures. En effet, plus le grain est grossier, plus la gélatinisation se fait facilement et complètement.

En ce qui concerne l'agent gélifiant ionique, on peut utiliser un polysaccharide acide tel qu'un pectate, un alginate ou la carboxyméthylcellulose. On obtient des résultats particulièrement bons avec l'alginate de sodium. On peut ajouter l'agent gélifant ionique à raison de 0,5 à 2 % en poids de la pâte.

Quant au cation formant un gel avec ledit agent gélifiant ionique, on choisit de préférence un ion de métal alcalino-terreux. Un ion particulièrement recherché sur le plan alimentaire et qui convient bien pour le présent usage est l'ion divalent calcium.

Il est important de préparer le mélange initial avec de l'eau adoucie. En effet, on a constaté que si l'on prépare le mélange de farine ou de semoule et d'agent gélifiant ionique avec de l'eau dure, la pâte extrudée a perdu toute cohésion et se désagrège. Par eau adoucie on peut comprendre toute eau dont la concentration en ions calcium est inférieure à $2.10^{-4}$ M.

En ce qui concerne la gélatinisation de la pâte par chauffage et pétrissage sous pression, on réalise cette opération sous une pression de 70-100 bars à une température de 60-100 °C durant environ 20-120 s. En effet, si l'on opère à une pression supérieure ou à une température plus élevée, il est difficile d'éviter ensuite une expansion de la pâte à la sortie de l'extrudeuse. Et si l'on tente d'abaisser la viscosité d'une pâte éventuellement trop visqueuse en élevant davantage la température durant la gélatinisation, la viscosité trop grande se retrouve lors du refroidissement avant l'extrusion et bloque le passage de la pâte à travers la filière. Si l'on travaille par contre à une pression inférieure à 70 bars et à une température plus basse que 60 °C, la pâte extrudée est trop molle et se désagrège du fait d'une gélatinisation insuffisante. Quant aux effets de la durée du traitement, on peut dire qu'une durée trop brève entraîne également une gélatinisation insuffisante et une durée prolongée au-delà de ce qui est nécessaire représente une dépense d'énergie inutile. Le domaine de 20 à 120 s est à considérer comme indiquant un ordre de grandeur pratique plutôt que des limites catégoriques. En effet, si l'instant où la pâte sort de la filière peut être déterminé avec une certaine précision, le moment du départ dans une installation en continu est imprécis à cause d'un certain va-et-vient de la matière première qui s'engage.

La suffisance ou l'insuffisance de la gélatinisation sont des notions pratiques liées à la cohésion suffisante ou non de la pâte à la sortie de l'extrudeuse d'une part et de la pâte reconstituée et cuite d'autre part. Cependant, si l'on préfère des expressions chiffrées, on peut indiquer à titre d'orientation que, pour le riz et le maïs, une gélatinisation à 70-100 % peut être considérée comme convenable alors qu'une gélatinisation inférieure à 70 % peut entraîner des difficultés telles que des pâtes trop molles à la sortie de l'extrudeuse ou des pâtes qui se désagrègent à la cuisson.

On refroidit ensuite la pâte à une température inférieure à 100 °C pour éviter une expansion à la sortie de l'extrudeuse sous l'effet de la vapeur qui se dilate à l'intérieur de la pâte et cherche à en sortir. On peut recommander de refroidir à une température de 55-90 °C, une température trop basse n'étant pas favorable du point de vue de la viscosité de la pâte à extruder.

Pour mettre les pâtes extrudées en contact avec l'eau contenant ledit cation formant un gel avec ledit agent gélifiant ionique, on peut soit les arroser avec un jet de cette eau lorsqu'elles débouchent de la filière d'extrusion, soit les plonger un instant dans un bain de cette eau. De préférence, on fait passer en continu les pâtes extrudées, durant 2-30 s, dans une eau à 20-70 °C contenant ledit cation en concentration de 0,05-0,2 M.

Afin d'éviter que l'eau adhérant à la surface des pâtes après ce traitement ne provoque le collage des pâtes entre elles ou sur elles-mêmes, notamment lors de la formation subséquente éventuelle de pelotes ou de nids, on peut ôter la plus grande partie de cette eau p. ex. en la soufflant. On a constaté que cette opération se réalise au mieux si l'on souffle de l'air de haut en bas sur les pâtes disposées sur un support à claire-voie tel qu'une bande sans fin en treillis p. ex., et si l'on aspire simultanément l'air par-dessous ledit support.

Quant au séchage des pâtes proprement dit, on a constaté qu'on peut le réaliser assez rapidement à température modérée et sous une humidité relative modérée à élevée. On peut recommander un séchage à une température de 50-90 °C sous une humidité relative de 30 à 90 % durant 2-4 h. On a constaté également que les pâtes ainsi obtenues pouvaient se craqueler au stockage, mais qu'il était possible d'éviter ce phénomène en refroidissant bruquement les pâtes après le séchage. On peut réaliser ce refroidissement brusque en faisant circuler les pâtes dans un courant d'air froid et humide p. ex.

Le présent procédé peut être mis en œuvre à l'aide d'appareils usuels tels que pétrins, presses et séchoirs de l'industrie des pâtes alimentaires. Il se prête particulièrement bien à la réalisation dans un appareil compact du type extrudeuse à vis ou à double vis pourvu d'un manteau divisé en secteurs successifs que l'on peut porter à des températures différentes par circulation de fluides à température adéquates.

Les exemples ci-après sont donnés à titre d'illustration. Les pourcentages et parties y sont indiqués en poids.

Dans ces exemples, les commentaires organoleptiques portent avant tout sur la texture des pâtes cuites. En effet, alors que le goût des pâtes est aisément reproductible et souffre rarement d'un défaut gênant, à moins que la matière première elle-même ne soit pas d'une qualité suffisante, leur texture ou leur comportement sous la dent est particulièrement critique. La qualité de cette texture n'est pas nécessairement bien rendue par des examens à l'aide d'appareils qui mesurent la résistance à l'écrasement. Une pâte croquante (l'« aldente » des Italiens) peut offrir une résistance moindre à l'écrasement qu'une pâte collante p. ex. Ou une pâte élastique, au goût des Orientaux, pourra donner des valeurs confondables avec celles obtenues pour des pâtes croquantes avec le même instrument.

Dans ces exemples, le degré de gélatinisation a été déterminé par la méthode enzymatique selon R. M. Shetty, D. R. Lineback et P. A. Seib, Cereal Chemistry 51, 364-375 (1974). Les pertes à la cuisson ont été déterminées en cuisant 1 partie de pâtes dans 9 parties d'eau, en séchant les pâtes et en les comparant aux pâtes initiales. Des contrôles ont été effectués en concentrant l'eau de cuisson et en séchant et pesant le résidu.


Exemple 1


On mélange en continu une semoule de riz à grains ronds (Oryza sativa japonica) et de l'eau adoucie contenant environ $1.10^{-4}$ M de $Ca^{++}$ de manière à obtenir une pâte à 45-50 % d'eau, et l'on y incorpore simultanément 0,66 % d'alginate de sodium. On réalise ce mélange dans la première partie d'une extrudeuse à double vis présentant successivement différentes zones entourées de manteaux indépendants dans lesquels on peut faire circuler des fluides à différentes températures. En l'occurence, l'extrudeuse présente une demi-douzaine de zones successives dans lesquelles les opérations de mélange, pétrissage, gélatinisation, refroidissement et extrusion se succèdent sans interruption.

Les matières premières, eau, farine de riz et alginate sont donc déversées au travers d'une trémille dans la première zone de l'extrudeuse. Dans une deuxième zone le simple mélange se poursuit. Dans ces premières zones ou première partie de l'extrudeuse, les vis sont très ouvertes et sont simplement agencées de manière à brasser la matière et à la faire avancer dans l'extrudeuse.

Dans les zones suivantes, la pâte est véritablement malaxée et soumise à de forts effets de cisaillement entre les vis dont les pas se resserrent et s'imbriquent plus intimement. On agence la disposition exacte des vis et des pas et l'on ajuste la vitesse de rotation des vis en sorte qu'il règne dans ces zones ou cette deuxième partie de l'extrudeuse une pression de environ 95 bars. On fait circuler un fluide de chauffage dans les manteaux correspondants de manière que sous l'effet de ce chauffage et de la chaleur dégagée par le frottement la teméprature de la pâte soit maintenue juste au-dessous de 100 °C. Le passage de la pâte dans cette deuxième partie de l'extrudeuse dure en moyenne 90 s.

Dans la dernière zone ou troisième et dernière partie de l'extrudeuse, les vis sont agencées et disposées de manière à exercer une poussée sur la pâte gélatinisée pour forcer son passage à travers la filière d'extrusion. On fait circuler un fluide de refroidissement dans le manteau de cette dernière partie de manière que la température des pâtes extrudées au moment où elles sortent de la filière soit de environ 75-80 °C. La filière elle-même est constituée par une plaque d'acier épais percé d'une multitude de petits trous de 0,9 mm de diamètre.

Les pâtes présentent à la sortie de la filière un degré de gélatinisation de 100 %. Elles sont immédiatement plongées ou tirées en continu dans un bain à 2 % de $CaCl_2$. Leur temps de séjour dans ce bain est de environ 8 s. Elles sont alors disposées sur une bande sans fin en treillis et conduites simultanément sous un fort courant d'air vertical et au-dessus d'une bouche de forte aspiration. Puis elles sont découpées en longs tronçons et disposées en pelotes.

Les pâtes sont ensuite séchées durant 3 h à une température de 50 °C sous une humidité relative de 30 %. Elles sont alors brusquement refroidies dans un fort courant d'air froid à 30 °C et 90 % d'humidité relative. .

Les pâtes alimentaires de riz ainsi obtenues ressemblent à un fil de verre enchevêtré. A la cuisson elles ne collent pas. Les pertes à la cuisson sont inférieures à 5 %. Les pâtes sont prêtes pour la consommation après une cuisson de 4-5 min dans l'eau en ébullition douce, à raison de 75 g de pâtes et 1,5 g de sel pour un demi litre d'eau. Elles ont une texture élastique reconnue comme excellente et typique par des dégustateurs avertis dans des pays d'origine de ces nouilles orientales.

## Exemple 2

On produit des pâtes de riz de la manière décrite à l'exemple 1 mais avec une farine de riz à grains ronds. On obtient des pâtes de qualité comparable à celles obtenues à l'exemple 1. Les pâtes de l'exemple 1 présentent cependant une texture sensiblement plus ferme.

## Exemple 3

On produit des pâtes de riz de la manière décrite à l'exemple 1 mais avec une semoule de riz à grains longs (Oryza sativa indica). On obtient des pâtes de qualité comparable à celles obtenues à l'exemple 1.

## Exemple 4

A l'aide d'une extrudeuse semblable à celle décrite à l'exemple 1, on prépare des pâtes de maïs.

On prépare un mélange sec à 99 % de farine de maïs et 1 % d'alginate de sodium. On introduit en continu dans l'extrudeuse ce mélange sec et de l'eau adoucie de façon à former une pâte à 45 % d'eau.

On gélatinise la pâte à 90-95 °C sous une pression de environ 85 bars tout en la travaillant mécaniquement vigoureusement durant environ 30 s.

On extrude la pâte gélatinisée à travers une filière refroidie à petits trous de 0,9 mm. Les pâtes extrudées ont une température de 70-75 °C à la sortie de la filière et elles présentent un degré de gélatinisation de 93 %. On les tire durant environ 5 s à travers un bain à 1 % de $CaCl_2$. On les conduit sur une bande sans fin en treillis où l'on chasse et entraîne l'eau qui adhère à leur surface à l'aide d'un soufflage d'air par-dessus et d'une aspiration d'air par-dessous. En effet, si l'on ne fait que souffler par-dessus, les pâtes sont chassées latéralement et ne peuvent pas être maintenues immobiles sur le treillis. Si l'on ne fait qu'aspirer par-dessous, il reste trop d'eau à la surface des pâtes. Mais si l'on conjugue les effets du soufflage par-dessus et de l'aspiration par-dessous, les pâtes sont bien réparties latéralement sur le treillis, elles y sont plaquées et elles sont efficacement débarrassées de l'eau qu'elles ont entraînée en sortant du bain de $CaCl_2$.

On découpe ensuite les pâtes à environ 2 m de longueur et on les dispose en petits tas en les laissant tomber verticalement sur elles-mêmes. Les petits tas ou pelotes de pâtes sont séchés durant 2 h à 70-80 °C sous une humidité relative de 90 %. Ils sont alors brusquement refroidis à l'aide d'air à 30 °C et 90 % d'humidité relative.

On obtient des pâtes alimentaires de maïs de fort belle allure présentant la couleur du maïs et l'aspect du verre. Elles ne collent pas à la cuisson. Après 4 min de cuisson dans l'eau bouillante doucement elles présentent sous la dent un comportement intermédiaire entre celui d'une pâte italienne cuite « al dente » et celui des pâtes de riz de l'exemple précédent. Leur goût est à peu près identique à celui d'une semoule de maïs cuite sous forme de bouillie ou de galette. L'eau de cuisson reste relativement claire. Les pertes à la cuisson ne sont que de 3 à 5 %.

## Exemples 5-8

D'une manière analogue à celle décrite à l'exemple 4, on prépare des pâtes de maïs, de pomme de terre, de soja et de lentilles.

Les détails concernant la composition des mélanges secs, les quantités respectives de mélange sec et d'eau introduites dans l'extrudeuse, la température et la pression de gélatinisation, la température à la sortie de la filière, la teneur en eau et le degré de gélatinisation des pâtes extrudées sont regroupés dans le tableau ci-dessous.

| Exemple No. | Mélange sec | | Eau (l/h) |
|---|---|---|---|
| | composition | quantité (kg/h) | |
| 5 | farine de maïs 99 %<br>alginate de sodium 1 % | 60 | 40 |
| 6 | farine de pommes de terre 74 %<br>amidon de maïs 25 %<br>alginate de sodium 1 % | 40 | 27 |

(Suite)

| Exemple No. | Mélange sec | | Eau (1/h) |
|---|---|---|---|
| | composition | quantité (kg/h) | |
| 7 | farine de soja dégraissée 50 %<br>amidon de maïs 49 %<br>alginate de sodium 1 % | 60 | 39 |
| 8 | farine de lentilles 74 %<br>amidon de maïs 25 %<br>alginate de sodium 1 % | 60 | 39 |

| Exemple No. | Gélatinisation | | Sortie de la filière | | |
|---|---|---|---|---|---|
| | Température (°C) | Pression (bars) | Température (°C) | Teneur en eau % | Taux de gélatini-sation (%) |
| 5 | 75-88 | 90 | 62 | 41 | 74 |
| 6 | 61-68 | 80 | 60 | 46 | 33 |
| 7 | 73-90 | 85 | 57 | 42 | 55 |
| 8 | 75-87 | 77 | 59 | 45 | 97 |

Après passage dans le bain de $CaCl_2$, égouttage, découpage, formation des pelotes et séchage dans des conditions similaires à celles décrites à l'exemple 4, on obtient chaque fois des pâtes alimentaires de belle allure vitreuse présentant la couleur typique du féculent utilisé. De même, leur comportement sous la dent est irréprochable et supporte la comparaison avec celui des pâtes de l'exemple 4.

A propos de l'amidon de maïs utilisé aux exemples 6 à 8, on peut noter tout d'abord qu'il a été choisi pour sa haute teneur en amylose dans le but de compenser la haute teneur en protéine du soja et des lentilles et la haute teneur en amylopectine de la pomme de terre. Mais il faut observer par ailleurs que les quantités indiquées ont été très généreusement comptées et qu'il n'est en fait pas nécessaire d'en mettre autant pour obtenir le comportement sous la dent souhaité des pâtes en question.

**Revendications**

1. Procédé de fabrication de pâtes alimentaires à base de féculents par des opérations de gélatinisation, d'extrusion et de séchage, caractérisé par le fait que l'on mélange une farine ou semoule de féculent avec de l'eau adoucie et un agent gélifiant ionique pour obtenir une pâte contenant 35 à 55 % d'eau, on gélatinise la pâte en la pétrissant sous une pression de 70-100 bar à une température de 60-100 °C durant environ 20-120 s, on refroidit la pâte à une température inférieure à 100 °C, on l'extrude en forme de pâtes alimentaires, on met les pâtes en contact avec de l'eau contenant un cation formant un gel avec ledit agent gélifiant ionique et on les sèche.

2. Procédé selon la revendication 1, caractérisé par le fait que l'agent gélifiant ionique est un polysaccharide acide, notamment un alginate et que le cation est un ion de métal alcalino-terreux, notamment l'ion divalent calcium.

3. Procédé selon la revendication 1, caractérisé par le fait que l'on ajoute l'agent gélifiant ionique à raison de 0,5 à 2 % en poids de la pâte et l'eau adoucie présente une concentration en ions calcium inférieure à $2.10^{-4}$ M.

4. Procédé selon la revendication 1, caractérisé par le fait que l'on refroidit la pâte à 55-90 °C avant l'extrusion.

6

5. Procédé selon la revendication 1, caractérisé par le fait que, après l'extrusion, on plonge les pâtes durant 2-30 s dans une eau contenant ledit cation en concentration de 0,05-0,2 M.

6. Procédé selon la revendication 1, caractérisé par le fait que, après le contact avec de l'eau contenant ledit cation, on enlève l'excès d'eau adhérent à la surface des pâtes en soufflant de l'air de haut en bas sur les pâtes disposées sur un support à claire-voie et en aspirant simultanément l'air par-dessous ledit support.

7. Procédé selon la revendication 1, caractérisé par le fait que l'on sèche les pâtes à une température de 50-90 °C sous une humidité relative de 30 à 90 % durant 2-4 h.

8. Procédé selon la revendication 1, caractérisé par le fait que, après le séchage, on refroidit les pâtes brusquement.

9. Procédé selon la revendication 1, caractérisé par le fait que ledit féculent est choisi dans le groupe comprenant le riz, le maïs, les légumineuses et les pommes de terre.

## Claims

1. A process for the production of pasta based on starchy materials including gelatinisation, extrusion and drying, which comprises mixing a flour or semolina of a starchy material with soft water and an ionic gelling agent to obtain a dough containing from 35 to 55 % of water, gelatinising the dough by heating and kneading under a pressure of from 70 to 100 bar at a temperature of from 60 to 100 °C over a period of 20 to 120 seconds, cooling the dough to a temperature below 100 °C, extruding it in the form of pasta, bringing the pasta into contact with water containing a cation which forms a gel with the ionic gelling agent, and drying the pasta.

2. A process as claimed in claim 1 wherein the ionic gelling agent is an acid polysaccharide, especially an alginate, and the cation is an alkaline-earth metal ion, especially divalent calcium.

3. A process as claimed in claim 1, wherein the ionic gelling agent is added in a proportion of from 0.5 to 2 % by weight of the dough, and the soft water has a concentration of calcium ions of less thant $2 \times 10^{-4}$ M.

4. A process as claimed in claim 1, wherein the dough is cooled to from 55 to 90 °C before extrusion.

5. A process as claimed in claim 1, wherein after extrusion the pasta is plunged for 2 to 30 seconds into water containing the cation in a concentration of from 0.05 to 0.2 M.

6. A process as claimed 1, wherein after the pasta has been brought into contact with water containing the cation, excess water adhering to the surface of the pasta is removed by blowing air downwards onto the pasta which is arranged on a foraminous support and by simultaneously sucking in air below said support.

7. A process as claimed in claim 1, wherein the pasta is dried at a temperature of from 50 to 90 °C and a relative humidity of from 30 to 90 % over a period of from 2 to 4 hours.

8. A process as claimed in claim 1, wherein after drying, the pasta is abruptly cooled.

9. A process as claimed in claim 1, wherein the starchy material is selected from rice, maize, legumes and potatoes.

## Patentansprüche

1. Verfahren zur Herstellung von Teigwaren auf Stärkebasis durch Gelatinisierung, Extrusion und Trocknung, dadurch gekennzeichnet, daß man ein Stärkemehl oder einen Stärkegrieß mit weichgemachtem Wasser und einem ionischen Geliermittel zu einer 35 bis 55 % Wasser enthaltenden Paste vermischt, die Paste durch Kneten unter einem Druck von 70 bis 100 bar bei einer Temperatur von 60 bis 100 °C während etwa 20 bis 120 Sekunden gelatinisiert, die Paste auf eine Temperatur unterhalb 100 °C abkühlt, sie in Form von Teigwaren extrudiert, die Teigwaren mit Wasser in Berührung bringt, das ein mit dem Geliermittel ein Gel ausbildendes Kation enthält, und die Teigwaren trocknet.

2. Verfahren nach Anspruch 1, dadurch gekennzeichnet, daß das ionische Geliermittel ein saures Polysaccharid ist, insbesondere ein Alginat, und daß das Kation ein Erdalkalimetallion ist, insbesondere das zweiwertige Calciumion.

3. Verfahren nach Anspruch 1, dadurch gekennzeichnet, daß man das ionische Geliermittel in einer Menge von 0,5 bis 2 Gew.-% der Paste zusetzt und daß das weichgemachte Wasser eine Calciumionenkonzentration von unter $2 \times 10^{-4}$ Mol aufweist.

4. Verfahren nach Anspruch 1, dadurch gekennzeichnet, daß man die Paste vor der Extrusion auf 55 bis 90 °C abkühlt.

5. Verfahren nach Anspruch 1, dadurch gekennzeichnet, daß man nach der Extrusion die Teigwaren 2 bis 30 Sekunden in ein Wasser eintaucht, das das genannte Kation in einer Konzentraiton von 0,05 bis 0,2 Mol enthält.

6. Verfahren nach Anspruch 1, dadurch gekennzeichnet, daß man nach dem Kontakt mit dem das Kation enthaltenden Wasser den an der Teigwarenoberfläche anhaftenden Wasserüberschuß durch Aufblasen von Luft von oben nach unten auf die auf einem Lattenrostträger angeordneten Teigwaren und durch gleichzeitiges Absaugen der Luft unterhalb dieses Trägers entfernt.

7. Verfahren nach Anspruch 1, dadurch gekennzeichnet, daß man die Teigwaren auf eine Temperatur von 50-90 °C unter einer relativen Feuchtigkeit von 30 bis 90 % während 2 bis 4 Stunden trocknet.

8. Verfahren nach Anspruch 1, dadurch gekennzeichnet, daß man nach dem Trocknen die Teigwaren schlagartig abkühlt.

9. Verfahren nach Anspruch 1, dadurch gekennzeicht, daß der Stärketräger aus der Reis, Mais, Leguminosen und Kartoffel umfassenden Gruppe ausgewählt wird.